Europäisches Patentamt

European Patent Office

Office européen des brevets

(11) Veröffentlichungsnummer: **0 293 375 B1**

(12) **EUROPÄISCHE PATENTSCHRIFT**

(45) Veröffentlichungstag der Patentschrift: **06.05.92**

(21) Anmeldenummer: **87901021.3**

(22) Anmeldetag: **03.02.87**

(86) Internationale Anmeldenummer:
**PCT/DE87/00041**

(87) Internationale Veröffentlichungsnummer:
**WO 87/04834 (13.08.87 87/18)**

(51) Int. Cl.⁵: **G09B 29/10**, G09B 27/08

(54) **KARTENGERÄT.**

(30) Priorität: **03.02.86 EP 86101373**
**29.09.86 DE 3633051**

(43) Veröffentlichungstag der Anmeldung:
**07.12.88 Patentblatt 88/49**

(45) Bekanntmachung des Hinweises auf die
Patenterteilung:
**06.05.92 Patentblatt 92/19**

(84) Benannte Vertragsstaaten:
**AT BE CH DE FR GB IT LI LU NL SE**

(56) Entgegenhaltungen:
**DE-A- 2 646 534**
**DE-A- 2 938 483**
**DE-B- 2 337 640**

(73) Patentinhaber: **Pachler Fröhlich, Ingrid**
**Aufhofen 8**
**W-8195 Egling(DE)**

Patentinhaber: **Pachler, Andreas**
**Aufhofen 8**
**W-8195 Egling(DE)**

(72) Erfinder: **Pachler Fröhlich, Ingrid**
**Aufhofen 8**
**W-8195 Egling(DE)**
Erfinder: **Pachler, Andreas**
**Aufhofen 8**
**W-8195 Egling(DE)**

(74) Vertreter: **Zipse + Habersack**
**Kemnatenstrasse 49**
**W-8000 München 19(DE)**

## Beschreibung

Die Erfindung betrifft ein Kartengerät gemäß dem Oberbegriff des Anspruchs 1.

Aus der DE-OS 26 46 534 ist ein Kartengerät bekannt, bei dem zur Anzeige eines Standortes eine Markierung über die plan ausgebreitete Karte bewegt wird. Die Markierung ist vom Schnittpunkt zweier kreuzender Drähte gebildet, die zwischen Gewindemuttern gespannt sind, die ihrerseits durch an gegenüberliegenden Rändern des Kartengehäuses gelagerte Gewindestangen längsverschieblich sind. Die Drehung der Gewindestangen erfolgt mittels Schrittmotoren, die mit Impulsen angesteuert werden. Wie man sich diese Ansteuerung mit Impulsen vorzustellen hat, ist nicht näher ausgeführt. Ungünstig ist an dem bekannten Kartengerät die Einstellung der Markierung über Gewindestangen, die nur relativ langsame Einstellbewegungen zulassen. Die Ausbildung der Markierung durch zwei einander kreuzende Drähte erfordert vier Gewindestangen mit 4 Schrittmotoren, wodurch der Bauaufwand relativ groß wird.

Ein weiteres Kartengerät, nämlich ein Leuchtglobus, ist aus der DE-AS 23 37 640 bekannt. Dieser Leuchtglobus besitzt in seinem Innern einen Punktstrahler zur Erzeugung eines Lichtflecks auf der Globuswand. Der Punktstrahler ist durch eine von außerhalb des Globus betätigbare Mechanik um eine Achse in der Äquatorialebene schwenkbar. Durch Einstellung der Schwenklage des Punktstrahlers und Verdrehen des Globus kann der Lichtfleck an einen gewünschten geographischen Ort gebracht werden, wobei Skalenringe erlauben, ausgehend von den bekannten Breiten- und Längenkoordinaten eines geographischen Ortes den Lichtfleck auf den entsprechenden Ort am Globus zu bringen. Der Nutzeffekt eines solchen Ortsanzeigers ist jedoch gering, weil das Verschwenken des Punktstrahlers und Verdrehen des Globus mit Hilfe der Skalenringe aufgrund der aus einer Tabelle herausgelesenen Koordinatenwerte eines gesuchten Ortes kaum schneller geht als das direkte Aufsuchen des Ortes auf der Globusoberfläche mittels dieser Koordinatenwerte. Die Einstellmechanik des Punktstrahlers verwendet einen Schnurtrieb mit einer etwas komplizierten Schnurführung, um Schlupf bei der Bewegungsübertragung zu verhindern. Nichtsdestotrotz ist Schlupf unvermeidlich und von Zeit zu Zeit ist eine Neujustierung des Skalenrings erforderlich.

Ein Kartengerät zur Darstellung von Fahrzeugpositionen, beispielsweise des momentanen Standorts oder der Zielposition in einer topographischen Landkarte, ist aus der DE-OS 29 38 483 bekannt. Ein Navigationsrechner ermittelt aus dem jeweiligen Fahrzeugkurs sowie den zurückgelegten Wegstrecken die Koordinaten des Standorts und steuert dementsprechend Schrittmotoren an, die über Seilzugtriebe zwei unabhängig voneinander bewegbare Linienelemente bewegen, deren gemeinsamer Schnittpunkt den jeweiligen Standort auf der Landkarte darstellt.

Der Erfindung liegt die Aufgabe zugrunde, ein Kartengerät zu schaffen, mit dessen Hilfe ein gewünschter geographischer Ort schnell und zuverlässig gefunden werden kann.

Diese Aufgabe wird erfindungsgemäß mit einem Kartengerät gelöst, wie es durch den Anspruch 1 gekennzeichnet ist. Weiterbildungen der Erfindung sind in den Unteransprüchen beschrieben.

Das Kartengerät nach der Erfindung besitzt einen Microcomputer, in den die Ortsparameter einer Vielzahl geographischer Orte eingespeichert sind. Solche geographischen Orte sind bei einer Straßenkarte beispielsweise Straßennamen, Sehenswürdigkeiten, Theater, Kinos oder dgl. und bei einem Globus Städte, Seen, Flüsse, Gebirge oder dgl.. Die Eingabe des gesuchten geographischen Ortes in den Microcomputer erfolgt zweckmäßig durch Eintippen des Namens des betreffenden geographischen Ortes auf einer Eingabetastatur. Durch entsprechende Programmierung kann dabei erreicht werden, daß nur so viele Buchstaben des jeweiligen geographischen Namens eingetippt werden müssen, wie zur eindeutigen Identifizierung notwendig sind. Ebenso kann erreicht werden, daß man bei fehlerhafter Eingabe einzelner Buchstaben die restlichen richtigen Buchstaben, soweit sie zur eindeutigen Identifizierung ausreichen, als Eingabe genügen läßt. Solche Programme liegen wie der Aufbau des Microcomputers im Rahmen des üblichen und brauchen hier nicht näher erläutert zu werden.

Auf eine Eingabe hin steuert der Microcomputer beispielsweise Schrittmotoren eines Antriebs- und Steuermechanismus' mit Impulsen entsprechend den der Eingabe zugehörigen eingespeicherten Ortsparametern an, um einen Ortsanzeiger wie beispielsweise einen Lichtfleck an den gewünschten geographischen Ort hinzuführen.

Das Kartengerät weist auch zumindest einen Bezugspunkt in Form eines Sensors zur Standortbestimmung des Ortsanzeigers mit Bezug zur Karte auf. Ein solcher Bezugspunkt kann beispielsweise ein Ausgangs- oder Nullpunkt des Ortsanzeigers sein, zu dem der Ortsanzeiger bei Ausschalten oder Neueinschalten des Geräts selbsttätig zurückkehrt. Ein oder mehrere Bezugspunkte können aber auch im Bewegungsbereich von Trägern des Ortsanzeigers an der Karte derart verteilt sein, daß bei normaler Benutzung des Geräts gelegentlich einer oder mehrere der Bezugspunkte erreicht werden.

Diese Bezugspunkte erlauben auch eine Standortbestimmung oder -überprüfung des Ortsanzeigers bei schlupfunterworfenen Antrieben, bei denen die Bewegungsübertragung von den Schrittmotoren auf den Ortsanzeiger nicht mittels formschlüssig ineinandergreifender Kraftübertragungsglieder, sondern mittels wegen ihres geringeren Bauaufwandes bevorzugter, schlupfunterworfener Kraftübertragungsglieder wie Schnurtrieben, Treibrädern und dergleichen erfolgt. Bei solchen Antrieben werden sich nach einer gewissen Anzahl von Bewegungsabläufen unvermeidlich Abweichungen zwischen den Soll- und dem Ist-Standort des Ortsanzeigers ergeben, die sich auf Grund der Standortbestimmung bzw. -überprüfung korrigieren lassen.

Die Bezugspunkte sind beispielsweise elektrische oder optische Kontaktgeber, denen im Microcomputer fest eingespeicherte Ortsparameter zugeordnet sind. Bei Erreichen eines Bezugspunkts wird in der Rechnereinheit nach Vergleich dieser fest eingespeicherten Ortsparameter mit den zu diesem Zeitpunkt errechneten Ortsparametern des Ortsanzeigers die erforderliche Korrektur-Impulszahl errechnet, mit der dann die Schrittmotoren beaufschlagt werden.

Es bestünde die Möglichkeit, vor jeder neuen Eingabe den Ortsanzeiger auf einen Ausgangs-, Bezugs- oder Nullpunkt zurückzuführen, um ausgehend hiervon den geographischen Ort entsprechend der neuen Eingabe anzufahren. Eleganter und schneller ist jedoch eine Lösung mit einer dem Microcomputer zugeordneten Rechnereinheit zur Berücksichtigung der Ortsparameter des Ausgangsorts des Ortsanzeigers bei der Neuaktivierung des Antriebs- und Steuermechanismus'. D.h. mit anderen Worten, die Ortsparameter des Ausgangsorts des Ortsanzeigers werden von den Ortsparametern des neu eingegebenen geographischen Orts abgezogen, um die Schrittmotoren mit einer entsprechend verminderten oder vergrößerten Impulszahl zu beaufschlagen.

Ausführungsbeispiele der Erfindung werden nachfolgend anhand beigefügter Zeichnungen näher beschrieben. Es zeigen

Fig. 1 ein Kartengerät mit einer auf der Deckseite eines Gehäuserahmens plan ausgespannten Karte in Draufsicht;

Fig. 2 und 3 eine Detailansicht des oberen Horizontalschlittens des Kartengeräts von Fig. 1 in Draufsicht bzw. im Querschnitt;

Fig. 4 und 5 eine Detailansicht des unteren Horizontalschlittens des Kartengeräts von Fig. 1 in Draufsicht bzw. im Querschnitt;

Fig. 6 und 7 eine Detailansicht des Vertikalschlittens des Kartengeräts von Fig. 1 in Draufsicht und in Seitenansicht;

Fig. 8 ein Steuerungsschema für das Kartengerät von Fig. 1;

Fig. 9 und 10 in um 90° zueinander gedrehten Seitenansichten einen Antriebs- und Steuermechanismus zur Montage in einen Globus; und

Fig. 11 bis 13 in um jeweils 90° zueinander gedrehten Ansichten einen anderen Antriebs- und Steuermechanismus zur Montage in einen Globus.

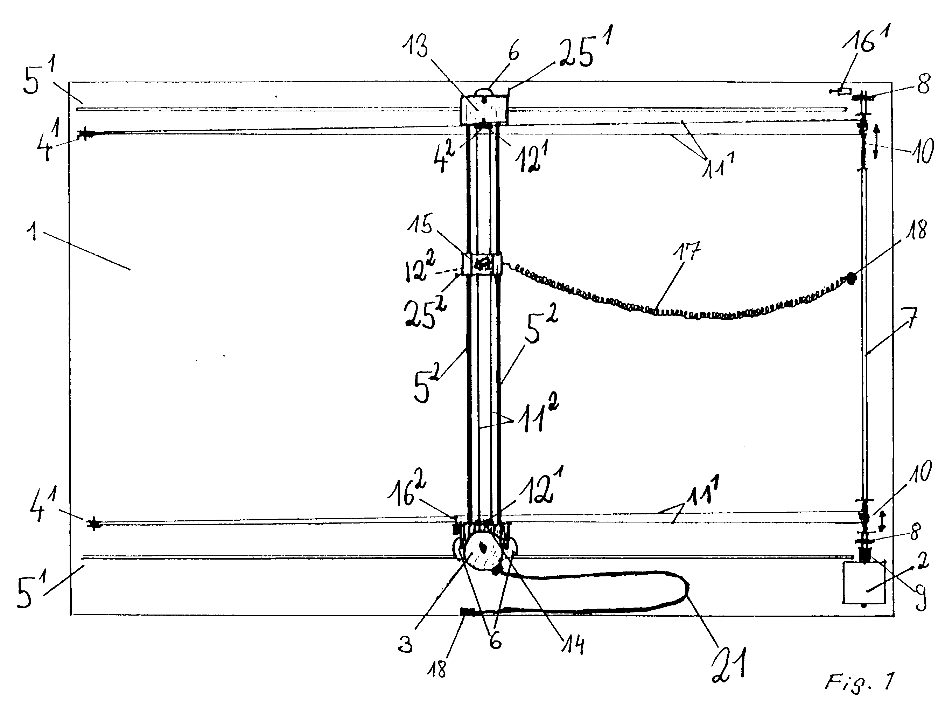

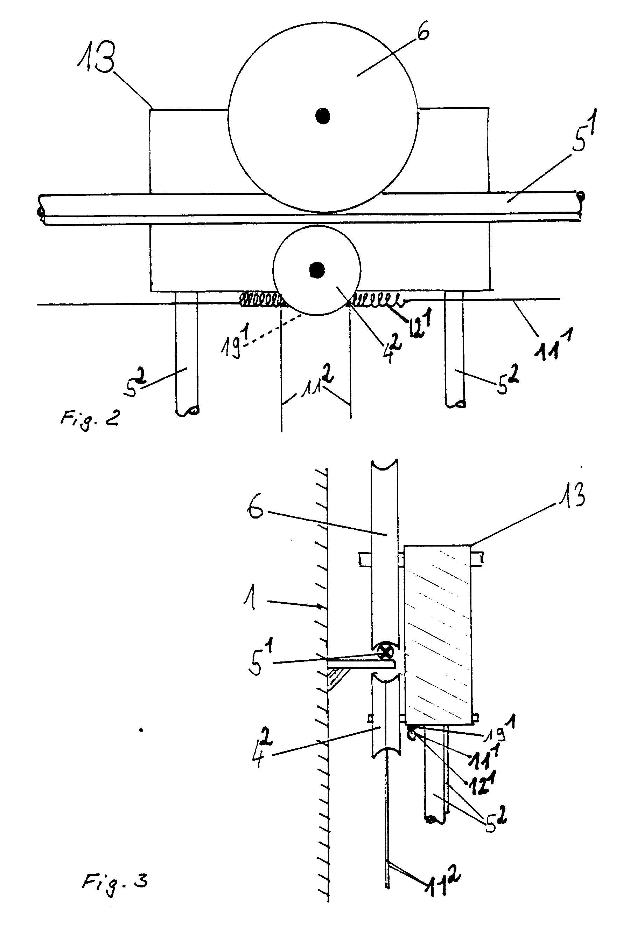

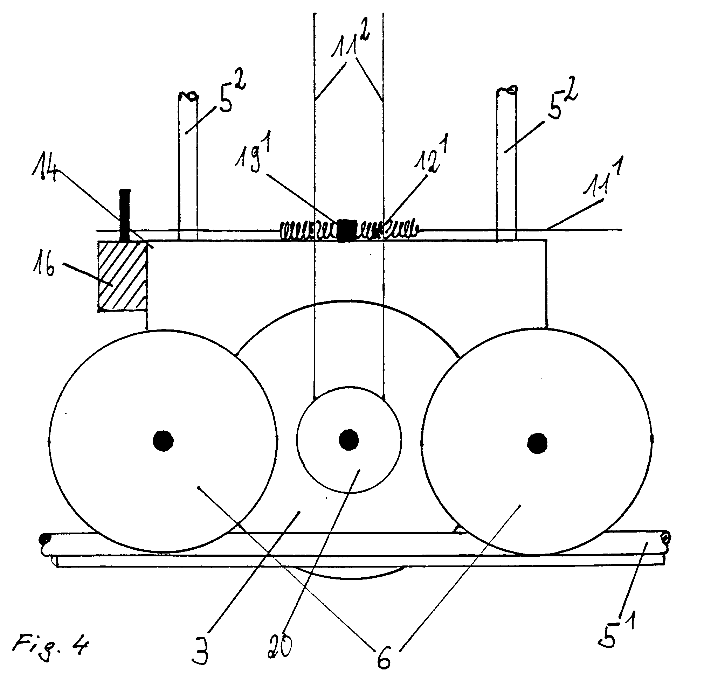

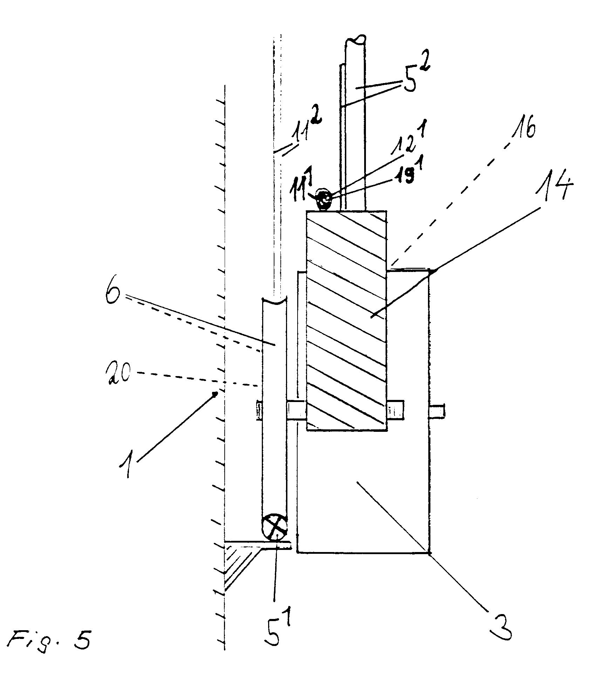

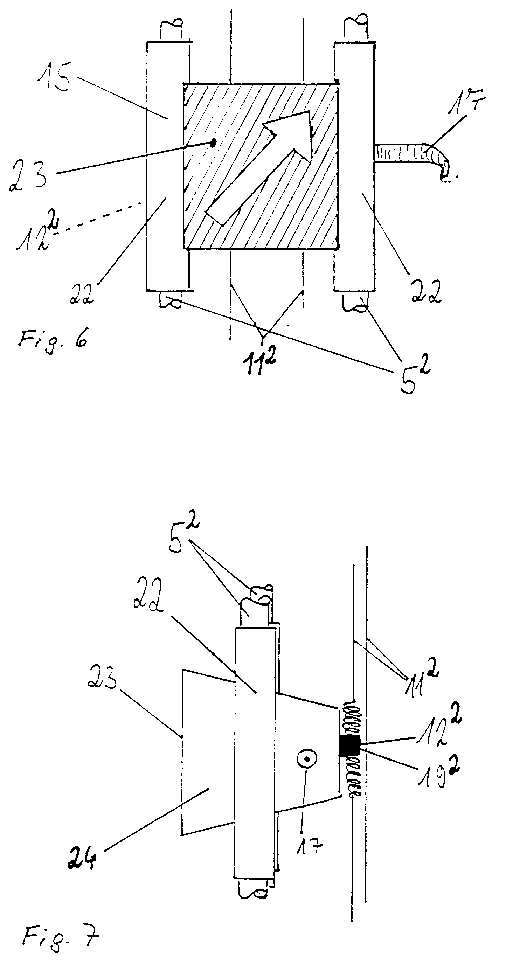

Das Kartengerät gemäß Fig.1-7 besitzt einen rechteckigen Gehäuserahmen 1, auf dessen (in der Zeichnung abgenommener) durchsichtiger Deckseite eine Karte plan ausgebreitet ist. Das Kartengerät wird vorzugsweise hochkant aufgestellt, beispielsweise an einer Wand aufgehängt.

Im Gehäuserahmen 1 sind eine obere und eine untere horizontale Laufschiene $5^1$ angeordnet, auf denen ein oberer Horizontalschlitten 13 und ein unterer Horizontalschlitten 14, die durch Laufschienen $5^2$ miteinander verbunden sind, mittels leichtgängig gelagerter Laufrollen 6 horizontal verschiebbar gelagert sind. Indem am oberen Horizontalschlitten 13 eine Laufrolle 6 und am unteren Horizontalschlitten 14 zwei Laufrollen 6 gelagert sind, ist eine stabile Dreipunktauflage erzielt. Der obere und der untere Horizontalschlitten 13 und 14 sind über Befestigungspunkte $19^1$ und Zugfedern $12^1$ an Schnurtriebe angehängt, die neben den Schnüren $11^1$ an der rechten Seite des Gehäuserahmens 1 eine vertikale Antriebswelle 7 und auf der linken Seite des Gehäuserahmens Umlenkrollen $4^1$ aufweisen. Die Schnüre $11^1$ sind in mehreren Windungen um die Antriebswelle 7 gewickelt, um im wesentlichen schlupffreie Kraftübertragung von der Antriebswelle 7 auf die Schnüre $11^1$ zu erhalten. Zum selben Zweck einer im wesentlichen schlupffreien Kraftübertragung werden als Schnüre $11^1$ geflochtene Kunststoffschnüre z.B. aus Polyamid benutzt und sind die Laufgebiete 10, auf denen die Windungen bei der Horizontalverschiebung der Schlitten 13 und 14 wandern, aufgerauht. Die Antriebswelle 7, die leichtgängig in Kugellagern 8 gelagert ist, wird über eine Kupplung 9 durch einen ersten Schrittmotor 2 angetrieben.

Auf den den oberen und den unteren Horizontalschlitten 13 und 14 verbindenden Laufschienen 5 läuft ein Vertikalschlitten 15, der ebenfalls durch einen Schnurtrieb angetrieben wird. Dieser Schnurtrieb umfaßt neben den Schnüren $11^2$, die wiederum über Zugfedern $12^2$ an Befestigungspunkten $19^2$ des Vertikalschlittens 15 angreifen, am oberen Horizontalschlitten 13 eine Umlenkrolle $4^2$ und am

unteren Horizontalschlitten 14 ein Antriebsrad 20, das auf der Abtriebswelle eines zweiten Schrittmotors 3 sitzt.

Der Vertikalschlitten 15 besitzt zwischen zwei Gleithülsen 22, die auf den vertikalen Laufschienen $5^2$ verschieblich sind, ein Lampengehäuse 24 mit einer Pfeilblende 23 auf seiner Oberseite. In dem Lampengehäuse 24 ist eine Lampe montiert, die über ein Spiralkabel 17 und eine Kabelhalterung $18^1$ an eine externe Stromversorgung angeschlossen ist.

Sensoren bzw. Microschalter $16^1$, $16^2$, die einerseits am Bewegungsende der Horizontalschlitten 13 und 14 am Gehäuserahmen 1 und andererseits am Bewegungsende des Vertikalschlittens 15 am unteren Horizontalschlitten 14 angeordnet sind, wirken mit Fahnen $25^1$, $25^2$ am Horizontal- bzw. Vertikalschlitten zusammen, um Koordinatennullpunkte festzulegen.

Der am unteren Horizontalschlitten 14 montierte zweite Schrittmotor 3 und der Microschalter $16^2$ sind durch ein Spiralkabel 21 und eine Kabelhalterung $18^2$ an den (in Fig. 1 nicht dargestellten)-Computer angeschlossen. Ebenso ist der erste Schrittmotor 2 an den Computer angeschlossen.

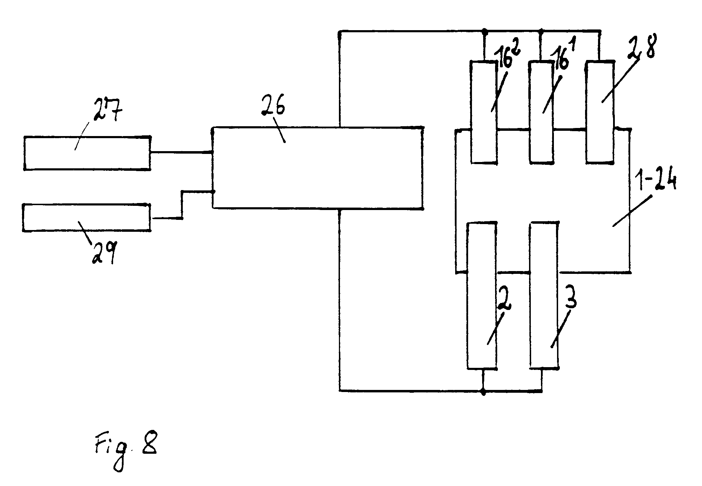

Das Schaltschema des beschriebenen Kartengeräts ist in Fig. 8 dargestellt. Demnach ist der Computer 26° mit Speicher- und Rechnereinheit einerseits mit der Eingabetastatur 27 und andererseits mit den Schrittmotoren 2 und 3 sowie den Sensoren $16^1$ und $16^2$ verbunden. Wie in Fig.8 dargestellt, ist ein weiterer Sensor 28 vorgesehen, der z.B. in einer Mittelposition des Horizontalschlittens 13 und 14 angeordnet sein kann. Ein an den Computer 26 angeschlossener Lautsprecher 29 gibt beispielsweise eine akustische Anzeige für Tastendruck, Löschung, Nichtauffinden des Begriffes.

Die Funktion des beschriebenen Kartengeräts ist wie folgt:

- nach dem Einschalten des Geräts fahren die Schlitten 13, 14 und 15 auf Null/Null-Position durch Abtasten der Sensoren $16^1$, $16^2$;
- Eingabe des geographischen Begriffs in die Eingabetastatur;
- Heraussuchen der gespeicherten Ortskoordinaten des eingegebenen geographischen Begriffs im Computer;
- Berechnung der Art und Anzahl von Impulsen an die Schrittmotoren 2 und 3;
- Ansteuern der Schrittmotoren 2 und 3.

Schlupfkorrektur:
passiert der Teil des Antriebs- und Steuermechanismus', welcher schlupfgefährdet ist, eine bestimmte Mittelposition, so spricht der Sensor 28 an. Dies wird vom Computer registriert, wobei eine evtl. Abweichung der zu diesem Zeitpunkt vom Rechner festgestellten Ortskoordinaten von dieser Mittelposition zur Bildung eines Korrekturwerts führt, der dem betreffenden Schrittmotor zugeleitet wird.

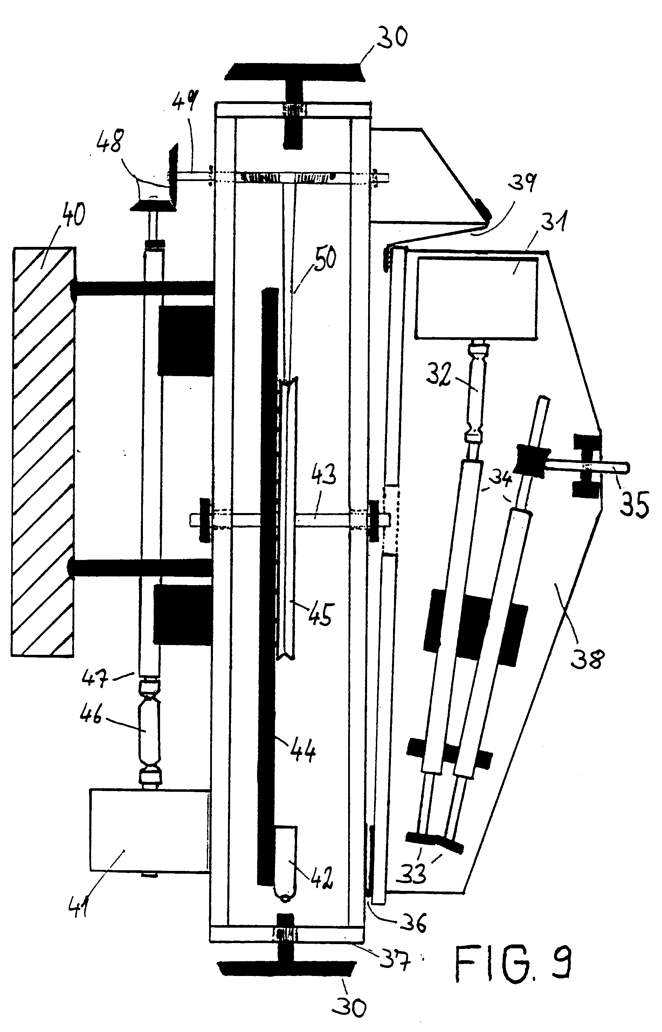

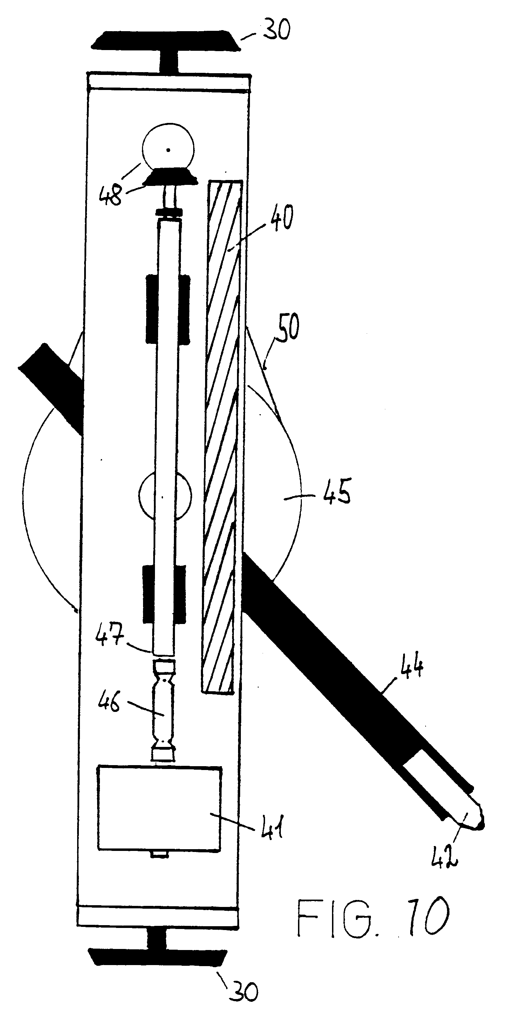

Eine mögliche Konstruktion eines Antriebs- und Steuermechanismus' zur Anordnung im Innern eines Globus ist in den Fig. 9 und 10 dargestellt. Der Mechanismus ist auf einem beliebigen Globusdurchmesser drehbar um Befestigungsstücke 30 gelagert, die an die Innenwand des (nicht dargestellten) Globus festgeklebt sind. Die Anklebeorte sind zweckmäßig so gewählt, daß möglichst keine im Computer eingespeicherten geographischen Orte bedeckt werden.

Einer von zwei Schrittmotoren 31 ist für die Drehung des Mechanismus' um die Befestigungsstücke 30 verantwortlich. Dazu treibt der Schrittmotor 31 über eine Kreuzgelenkkupplung 32 und zwei mit Zahnrädern 33 verbundene Wellen 34 ein leichtgängig gelagertes, gummiertes Antriebsrad 35 an. Um stets einen guten Kontakt des Antriebsrads 35 mit der Innenwand des Globus zu gewährleisten, ist die ganze Anordnung auf einer durch ein Scharnier 36 mit dem Träger 37 verbundenen seitlichen Platte 38 montiert und durch ein elastisches Zugband 39 gegen die Globusinnenwand gedrückt. Somit wird durch die Bewegung des Antriebsrades 35 der gesamte Mechanismus im Innern des Globus gedreht. Um der Ungleichverteilung des Gewichts entgegenzuwirken, ist auf der gegenüberliegenden Seite ein Gegengewicht 40 angebracht.

Ein zweiter Schrittmotor 41 übernimmt die Drehung eines Punktstrahlers 42 um eine Achse 43, die im wesentlichen senkrecht zu der durch die Befestigungsstücke 30 festgelegte ersten Drehschse verläuft. Der Punktstrahler 42 ist auf einer länglichen Stange 44 befestigt, die zusammen mit einem Antriebsrad 45 auf der drehbaren Achse 43 montiert ist. Um diese Anordnung von Antriebsrad, Stange und Punktstrahler in Drehung zu versetzen, ist der Schrittmotor 41 über eine Kreuzgelenkkupplung 46 mit einer Welle 47 verbunden, die ihrerseits über ein aus Kegelzahnrädern 48 bestehendes Winkelgetriebe eine im Träger 37 gelagerte Antriebswelle 49 antreibt. Die Verbindung zwischen der Antriebswelle 49 und dem Antriebsrad 45 erfolgt über eine Schnur 50, die, da der Punktstrahler 42 maximal eine 180°-Schwenkbewegung durchführen muß, einerseits punktförmig am Antriebsrad 45 und andererseits mit ihren beiden Enden an der Antriebswelle 49 festgelegt sein kann. Die Bewegungsübertragung erfolgt dadurch im wesentlichen schlupffrei.

Durch Impulsansteuerung der Schrittmotoren 31 und 41 kann der Punktstrahler 42 an jedem gewünschten Ort des Globus einen Lichtfleck erzeugen. Die Impulsansteuerung erfolgt in gleicher Weise wie zuvor in Verbindung mit dem Kartengerät nach Fig. 1 bis 8 beschrieben. Bei der Einspeicherung der geographischen Orte in den Computer ist selbstverständlich der gewählte Anbringungsort der Befestigungsstücke 30 zu berücksichtigen. Indem an der Globusinnenwand Sensoren angebracht werden, deren Ortsparameter im Computer fast eingespeichert sind, kann im Betrieb ständig eine Standortbestimmung einschließlich einer Schlupfkorrektur erfolgen.

Bei dem beschriebenen Ausführungsbeispiel wurden die Dreh- und Schwenkbewegungen von dem Antriebs- und Steuermechanismus selbst durchgeführt. Der Vorteil ist, daß dabei der Globus von außen wie üblich beispielsweise um eine Nord-Süd-Achse gedreht werden kann, und zwar ohne Beeinflussung des Antriebs- und Steuermechanismus'. Eine Drehung des Globus ist dabei selbstverständlich nur soweit möglich, wie es durch die Stromzuführung für die Schrittmotoren und den Punktstrahler zugelassen wird, welche Stromzuführung über das Globuslager am Südpol erfolgt.

Mit dem beschriebenen Antriebs- und Steuermechanismus ist eine zweite Ausführungsform realisierbar, wenn der Träger 37 stationär in der Nord-Süd-Achse des Globus angeordnet wird. In diesem Fall wird durch das Antriebsrad 35 nicht der Antriebs- und Steuermechanismus selbst, sondern der Globus gedreht. Der Vorteil dieser Ausführungsform ist eine leichtere Stromzuführung zu den Schrittmotoren und dem Punktstrahler.

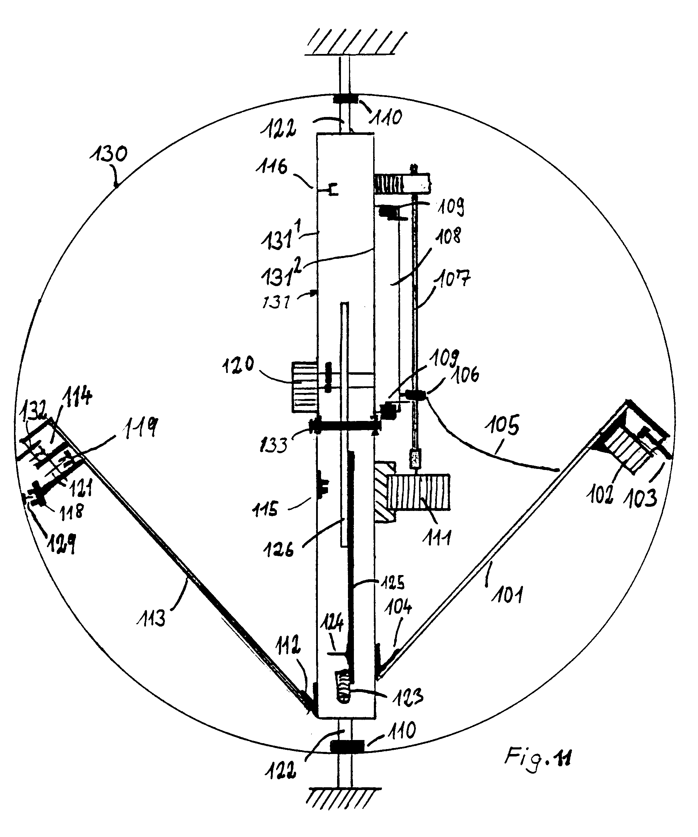

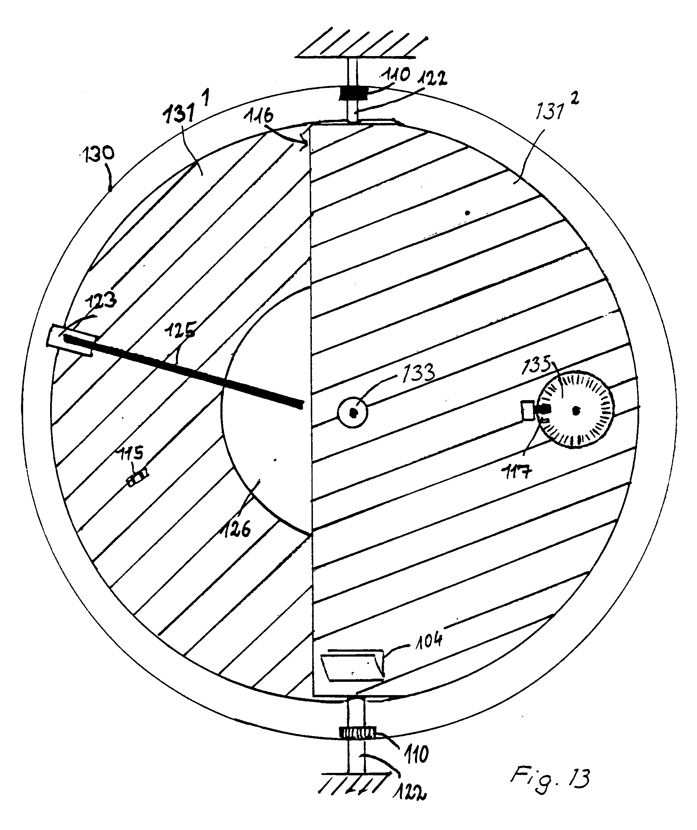

Eine dritte Ausführungsform eines Antriebs- und Steuermechanismus' zum Einbau in einen Globus ist in Figuren 11 bis 13 dargestellt. Diese Ausführungsform eignet sich besonders in Fällen, wo bei Nichtbenutzung der "Suchautomatik" der Globus frei drehbar bleiben soll.

Der Mechanismus besitzt einen Träger 131 in Form einer hinteren Träger-Vollscheibe $131^1$ und einer dazu im Abstand gehaltenen vorderen Träger-Halbscheibe $131^2$. Vom Umfang des Trägers 131 auf diametral gegenüberliegenden Seiten abstehende Lagerzapfen 122 bilden eine Nord-Süd-Achse, um die der Globus 130 auf Kugellagern 110 leichtgängig gelagert ist.

Ein Arm 101 mit einem Antriebsmotor 102 und einem gummierten Antriebsrad 103 an seinem freien Ende ist durch ein Scharnier 104 mit seinem unteren Ende an die Träger-Halbscheibe $131^2$ angelenkt. Durch das Eigengewicht des Arms 101 und durch das Gewicht des Antriebsmotors 102 liegt das Antriebsrad 103 gegen die Globusinnenwand an, so daß, wenn der Antriebsmotor 102 in Gang gesetzt wird, das Antriebsrad 103 den Globus 130 dreht. Der Antriebsmotor 102 ist nicht wie bei den vorherigen Ausführungsbeispielen ein Schrittmotor, sondern ein kleinbauender und ohne Trafo betreibbarer z. B. 220 Volt-Synchronmotor. Dem Antriebsmotor 102 kann in üblicherweise ein Untersetzungsgetriebe zugeordnet sein.

Die Zählfunktion der Schrittmotoren der vorherigen Ausführungsbeispiele übernimmt hier ein separates Zählwerk 114, das am freien Ende eines zweiten Arms 113 angeordnet ist, der durch ein Scharnier 112 mit seinem unteren Ende an der Träger-Vollscheibe $131^1$ angelenkt ist. Das Zählwerk 114 umfaßt ein leicht drehbares gummiertes Rad 132, das auf Grund des Eigengewichts von Arm 113 und Zählwerk 114 gegen die Globusinnenwand anliegt und vom drehenden Globus 130 mitgedreht wird. Die Drehung des Rads 132 wird über eine Übersetzung auf eine Registrierscheibe 121 übertragen, deren Drehung ihrerseits durch eine Gabellichtschranke 119 abgetastet wird.

Auf einer zur Nord-Süd-Achse im wesentlichen senkrechten Achse 133 ist zwischen den Trägerscheiben $131^1$ und $131^2$ eine Scheibe 126 drehbar gelagert, an der auf einer Stange 125 der Punktstrahler 123 befestigt ist. Der Antrieb der Scheibe 126 für einen Vertikalschwenk des Punktstrahlers 123 erfolgt durch den Antriebsmotor 120, der über eine Untersetzung 128 und einen Antriebsriemen 127 mit der Scheibe 126 verbunden ist. Bezüglich des Antriebsmotors 120 gilt das bezüglich des Antriebsmotors 102 Gesagte. Die Erfassung der Wegstrecke des Punktstrahlers 123 erfolgt wie bei der Erfassung der Drehbewegung des Globus mittels eines Zählwerks 134 mit einer Registrierscheibe 135, die direkt auf der Abtriebswelle des Motors 120 angebracht ist und durch eine Gabellichtschranke 117 abgetastet wird.

Die Wirkungsweise des beschriebenen Antriebs- und Steuermechanismus' ist entsprechend zu der des Mechanismus' gemäß Figuren 9 und 10, mit der Ausnahme, daß die Zählfunktion zur Erfassung der Wegstrecken nicht von Schrittmotoren, sondern von separaten Zählwerken 114, 134 ausgeübt wird. Neben dem Vorteil, daß diese Ausführungsvariante keine teuren Schrittmotoren erfordert, ist zu nennen, daß infolge der geringen Drehmassen zwischen Globus 130 und Rad 132 des Zählwerks 114 kaum Schlupf auftritt, was der Genauigkeit der "Suchautomatik" zugute kommt.

Indem auch hier an der Globusinnenwand, wie zuvor beschrieben, Sensoren angebracht werden, deren Ortsparameter im Computer fest eingespeichert sind, kann im Betrieb ständig eine Standortbestimmung einschließlich einer Schlupfkorrektur erfolgen. Ein solcher Sensor ist beispielsweise, wie in Figur 11 dargestellt, ein an die Globusinnenwand angebrachter Metalldorn 129, der mit einer Gabellichtschranke 118 am Arm 113 zusammenwirkt. Der Metalldorn 129 kann auch eine Ausgangsposition des Globus 130 festlegen, indem der Globus bei Ein- oder Ausschalten des Geräts durch den Antriebsmotor 102 solange gedreht wird, bis sich der Metalldorn 129 durch die Lichtschranke 118 bewegt. In gleicher Weise kann auch durch am Träger 131 angebrachte Gabellichtschranken 115 und 116, die mit einem Metalldorn 124 an der Trägerstange 125 des Punktstrahlers 123 zusammenwirken, eine Schlupfkorrektur bewirkt bzw. eine Ausgangsposition angefahren werden. Der Punktstrahler 123 ist in den einzelnen Figuren 11 bis 13 in unterschiedlichen Schwenklagen dargestellt.

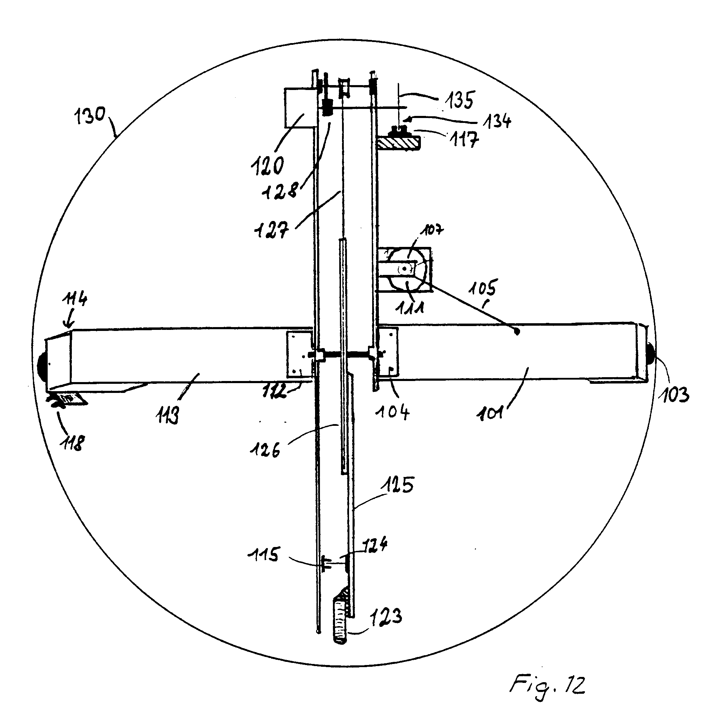

Damit der Globus 130 bei Nichtverwendung der "Suchautomatik" frei und leicht gedreht werden kann, ist, wie in Figuren 11 und 12 gezeigt, eine Einrichtung zum Abheben des Antriebsrads 103 von der Globusinnenwand vorgesehen. Diese Einrichtung umfaßt einen am Träger 131 angeordneten Antriebsmotor 111, der eine Gewindestange 107 in Drehung versetzt. Auf der Gewindestange 107 ist eine durch eine Führungsschiene 108 gegen Verdrehung gesicherte Gewindemutter 106 auf- oder abwärts bewegbar. Die Mutter 106 ist über ein Zugseil 105 mit dem Arm 101 verbunden, so daß der Arm hochgezogen wird, wenn sich die Mutter 106 nach oben bewegt. Mikroschalter 109 legen die untere und die obere Endposition der Gewindemutter 106 fest.

**Patentansprüche**

1. Kartengerät mit Ortsanzeiger und mit einem Antriebs- und Steuermechanismus mit Eingabeteil zum Hinführen des Ortsanzeigers an den einer Eingabe entsprechenden geographischen Ort,
 **gekennzeichnet** durch einen Mikrocomputer (26) mit fest eingespeicherten Ortsparametern einer Vielzahl geographischer Orte und einem Eingabeteil (27) des Mikrocomputers zum Aktivieren des Antriebs- und Steuermechanismus' entsprechend den fest eingespeicherten Ortsparametern des jeweils eingegebenen geographischen Ortes und durch zumindest einen festen Bezugspunkt auf der Karte, dessen Position über einen Sensor (16) vom Microcomputer erfaßt wird, so daß eine Standortbestimmung des Ortsanzeigers mit Bezug zu der Karte ermöglicht wird.

2. Kartengerät nach Anspruch 1,
 **gekennzeichnet** durch eine Eingabetastatur (27) zum Eintippen des Namens des gewünschten geographischen Ortes.

3. Kartengerät nach Anspruch 1 oder 2,
 dadurch **gekennzeichnet**, daß der Mikrocomputer (26) eine Rechnereinheit besitzt zur Berücksichtigung der Ortsparameter des Ausgangsortes des Ortsanzeigers bei der Neuaktivierung des Antriebs- und Steuermechanismus.

4. Kartengerät nach einem der Ansprüche 1 bis 4, dadurch gekennzeichnet, daß ein über einen Sensor (16) erfaßbarer Bezugspunkt eine Nullage des Ortsanzeigers bestimmt, in die der Ortsanzeiger bei Ausschalten oder bei Neueinschalten des Geräts selbsttätig zurückkehrt.

5. Kartengerät nach einem der Ansprüche 1 - 4, dadurch gekennzeichnet, daß ein oder mehrere über einen Sensor (29) erfaßbare Bezugspunkte im Bewegungsbereich von Trägern (13,14, 15,37) des Ortsanzeigers an der Karte derart verteilt sind, daß bei normaler Benutzung des Geräts gelegentlich einer oder mehrere der Bezugspunkte erreicht werden.

6. Kartengerät nach einem der Ansprüche 1 bis 5, dadurch gekennzeichnet, daß als über einen Sensor (16,29) erfaßbare Bezugspunkte Kontaktgeber angeordnet sind.

7. Kartengerät nach einem der Ansprüche 1 bis 6, dadurch **gekennzeichnet**, daß der Antriebs- und Steuermechanismus in an sich bekannter Weise Schrittmotoren (2,3; 31,41) aufweist, die vom Microcomputer impulsgesteuert sind.

8. Kartengerät nach einem der Ansprüche 1 bis 6, dadurch **gekennzeichnet**, daß der Antriebs- und Steuermechanismus neben den Antriebsmotoren (102,120) mit dem Mikrocomputer verbundene Zählwerke (114, 134) zur Erfassung der Wegstrecke des Ortsanzeigers mit Bezug zur Karte aufweist.

9. Kartengerät nach einem der Ansprüche 1 bis 7, mit einer auf der Deckseite eines Gehäuserahmens plan ausgespannten Karte, auf oder unter welcher der Ortsanzeiger durch Schlitten in zwei im wesentlichen senkrecht zueinander verlaufenden Richtungen bewegbar ist, dadurch **gekennzeichnet**, daß die Schlitten (13,14,15) über Schnurtriebe (11) bewegbar sind, wobei zur im wesentlichen schlupffreien Kraftübertragung von Antriebswellen oder-rädern (7,20) geflochtene Kunststoffschnüre (Polyamid) verwendet sind.

10. Kartengerät nach einem der Ansprüche 1 bis 8 mit einem Globus als Karte, wobei der Antriebs- und Steuermechanismus mit Ortsanzeiger in Form eines Punktstrahlers im Globusinnern angeordnet ist, dadurch **gekennzeichnet**, daß ein Träger (37) auf einem Globusdurchmesser angeordnet ist, an welchem Träger ein elastisch gegen die Globusinnenwand angedrücktes Antriebsrad (35) gelagert ist, und daß in einer zur Bewegungsebene des Antriebsrads bzw. des Globus im wesentlichen senkrechten Ebene am Träger (37) ein Punktstrahler (42) drehbar angetrieben gelagert ist.

11. Kartengerät nach Anspruch 10,
dadurch **gekennzeichnet**, daß der Träger stationär in der Nord-Süd-Achse des Globus angeordnet ist und der Globus um diese Nord-Süd-Achse drehbar gelagert ist.

12. Kartengerät nach Anspruch 11,
**gekennzeichnet** durch eine am Träger angeordnete Einrichtung (105-109) zum Abheben des Antriebsrads von der Globusinnenwand.

13. Kartengerät nach Anspruch 12,
dadurch **gekennzeichnet**, daß der Träger um mit der Gehäuseinnenwand verbundene Lager (30) drehbar angeordnet ist.

**Claims**

1. A cartographic device, comprising a place indicator and a drive and control mechanism which includes an input portion to lead the place indicator to the geographic place corresponding to an input, **characterized** by a microcomputer (26) with permanently stored local parameters of a plurality of geographic locations and by an input portion (27) of the microcomputer for activating the drive and control mechanism in correspondence with the permanently stored local parameters of the respective geographic place which was put in, and by at least one fixed reference point on the map, the position of which point is detected by the microcomputer by way of a sensor (16), whereby the position finding of the place indicator with reference to the map is rendered possible.

2. The cartographic device as claimed in claim 1, characterized by an input keyboard (27) for typing in the name of the desired geographic place.

3. The cartographic device as claimed in claim 1 or 2, characterized in that the microcomputer (26) comprises a calculator unit to take into consideration the local parameters of the starting point of the place indicator in the reactivation of the drive and control mechanism.

4. The cartographic device as claimed in one of claims 1 to 4, characterized in that a reference point detectable by way of a sensor (16) determines a zero position of the place indicator to which position the place indicator returns automatically upon switch-off or renewed switch-on of the device.

5. The cartographic device as claimed in one of claims 1 to 4, characterized in that one or more reference points detectable by a sensor (29) are distributed within the range of movement of the carrier members (13,14,15,37) of the place indicator on the map such that occasionally one or more of the reference points are reached during normal use of the device.

6. The cartographic device as claimed in one of claims 1 to 5, characterized in that contactors are arranged as reference points which are detectable by way of a sensor (16,29).

7. The cartographic device as claimed in one of claims 1 to 6, characterized in that the drive and control mechanism in per se known manner comprises stepping motors (2,3; 31,41) which are pulse-controlled by the microcomputer.

8. The cartographic device as claimed in one of claims 1 to 6, characterized in that, apart from the drive motors (102,120), the drive and control mechanism comprises counters (114,134) which are connected to the microcomputer to detect the distance covered by the place indicator with respect to the map.

9. The cartographic device as claimed in one of claims 1 to 7, comprising a map which is extended flat on the cover side of a housing frame and on or under which the place indicator is movable by means of slides in two directions substantially at right angles with respect to each other, **characterized** in that the slides (13, 14,15) are adapted to be driven by string drive means (11), braided plastic (poylamide) cords being used for substantially slip-free power transmission from drive shafts or wheels (7, 20).

10. The cartographic device as claimed in one of claims 1 to 8, with the map embodied by a globe, having the drive and control mechanism, including the place indicator in the form of a point radiator, disposed inside the globe, **characterized** in that a carrier member (37) is arranged on a globe diameter and suppports a drive wheel (35) which is pressed elastically against the inside wall of the globe, and in that a point radiator (42) is supported to be driven in rotation on the carrier member (37)in a plane substantially vertical to the plane of movement of the drive wheel or of the globe.

11. The cartographic device as claimed in claim 10, characterized in that the carrier member is stationarily arranged on the north-south axis of the globe and the globe is supported for rotation about this north-south axis.

12. The cartographic device as claimed in claim 11, characterized by a means (105 - 109) mounted on the carrier member to lift off the drive wheel from the inside wall of the globe.

13. The cartographic device as claimed in claim 12, characterized in that the carrier member is mounted for rotation about bearings (30) which are connected to the inside wall of the casing.

**Revendications**

1. Appareil de cartographie comportant un indicateur de lieu et un mécanisme d'entraînement et de commande, avec une partie d'introduction, pour le passage de l'indicateur de lieu sur un lieu géographique correspondant à une introduction,
caractérisé par un micro-ordinateur (26), à paramètres de lieu mis en mémoire et fixes, d'une pluralité de lieux géographiques et une partie d'introduction (27) du microordinateur, pour activer le mécanisme d'entraînement et de commande en fonction des paramètres de lieu mis en mémoire et fixes, de chaque lieu géographique introduit et par au moins un point de référence fixe sur la carte, dont la position est saisie par le micro-ordinateur, par l'intermédiaire d'un capteur (16), de façon à permettre une localisation par l'indicateur de lieu, par rapport à la carte.

2. Appareil de cartographie selon la revendication 1, caractérisé par un clavier d'introduction (27) pour taper le nom du lieu géographique souhaité.

3. Appareil de cartographie selon la revendication 1 ou 2, caractérisé en ce que le micro-ordinateur (26) comporte une unité de calcul, pour prendre en compte les paramètres de lieu du lieu de départ de l'indicateur de lieu, lors d'une nouvelle activation du mécanisme d'entraînement et de commande.

4. Appareil de cartographie selon l'une des revendications 1 à 4, caractérisé en ce qu'un point de référence, susceptible d'être saisi par un capteur (16) détermine une position de zéro de l'indicateur de lieu, dans laquelle l'indicateur de lieu revient automatiquement, une fois mis hors service ou lors d'une remise en service de l'appareil.

5. Appareil de cartographie selon l'une des revendications 1 à 4, caractérisé en ce qu'un ou plusieurs points de référence, susceptibles d'être saisis par l'intermédiaire d'un capteur (29), dans la zone de déplacement de supports (13,14,15,37) de l'indicateur de lieu, sont répartis sur la carte, de telle façon que lors d'une utilisation normale de l'appareil, on atteigne occasionnellement un ou plusieurs des points de référence.

6. Appareil de cartographie selon l'une des revendications 1 à 5, caractérisé en ce que des transducteurs de contact sont disposés, à titre de points de référence susceptibles d'être saisis par l'intermédiaire d'un capteur (16,29).

7. Appareil de cartographie selon l'une des revendications 1 à 6, caractérisé en ce que le mécanisme d'entraînement et de commande présente, de manière connu en soi, des moteurs pas-à-pas (2,3;31,41) soumis à une commande par impulsion du micro-ordinateur.

8. Appareil de cartographie selon l'une des revendications 1 à 6, caractérisé en ce qu'outre les moteurs d'entraînement (102, 120), le mécanisme d'entraînement et de commande présente des compteurs (114,134), reliés au micro-ordinateur, pour assurer la saisie du chemin parcouru par l'indicateur de lieu, par rapport à la carte.

9. Appareil de cartographie selon l'une des revendications 1 à 7, avec une carte, tendue à plat au-dessus d'un cadre de carter, sur ou sous laquelle l'indicateur de lieu est déplaçable par des chariots, en deux directions pratiquement perpendiculaires entre elles, caractérisé en ce que les chariots (13,14,15) sont déplaçables sur des transmissions à corde, des cordes en matière synthétique (polyamide) tressées étant utilisées en vue d'assurer une transmission mécanique pratiquement sans glissement depuis les arbres ou roues d'entraînement (7,20).

10. Appareil de cartographie selon l'une des revendications 1 à 8, avec un globe terrestre servant de carte, le mécanisme d'entraînement et de commande étant disposé sous la forme d'un émetteur de rayon ponctuel à l'intérieur du globe terrestre, caractérisé en ce que sur un diamètre de globe terrestre, est disposé un support (37) sur lequel est monté une roue d'entraînement (35) pressée élastiquement contre la paroi intérieure du globe, et qu'un émetteur de rayon ponctuel (42) est monté sur le support (37), avec un entraînement à rotation, dans un plan pratiquement perpendiculaire au plan de déplacement de la roue d'entraînement, respectivement du globe.

11. Appareil de cartographie selon la revendication 10, caractérisé en ce que le support est disposé stationnaire dans l'axe nord-sud du globe et que le globe est monté tournant autour de cet axe nord-sud.

12. Appareil de cartographie selon la revendication 11, caractérisé par un dispositif (105 à 109), monté sur le support, en vue de soulever la roue d'entraînement par rapport à la paroi intérieure du globe.

13. Appareil de cartographie selon la revendication 12, caractérisé en ce que le support est disposé tournant autour du palier (30) relié à la paroi intérieure de carter.

Fig. 1

Fig. 2

Fig. 3

Fig. 4

Fig. 5

Fig. 6

Fig. 7

Fig. 8

FIG. 9

FIG. 10

Fig. 11

Fig. 12

Fig. 13